# EUROPEAN PATENT SPECIFICATION

(11) **EP 4 149 856 B1**
(45) Date of publication and mention of the grant of the patent: **10.12.2025**
(21) Application number: 21727414.1
(22) Date of filing: 17.05.2021
(51) Int. Cl.: B65D 73/00

(54) **PACKAGING ARTICLE**
VERPACKUNGSARTIKEL
ARTICLE D'EMBALLAGE

(30) Priority: 15.05.2020 GB 202007233
(43) Date of publication of application: 22.03.2023
(73) Proprietor: Reckitt Benckiser Finish B.V., 2132 WT Hoofddorp (NL)
(72) Inventor: LINK, Rainer, 69115 Heidelberg (DE)
(74) Representative: Heritage, Kevin Stephen Charles
(86) International application number: PCT/EP2021/062979
(87) International publication number: WO 2021/229098

(56) References cited:
- WO-A2-2004/085266
- IT-A1- MI20 100 376
- JP-A- 2004 149 139
- US-A1- 2011 278 192
- US-A1- 2014 209 497

## Description

A blister pack is commonly used in packaging. It provides a means to deliver the product to the consumer in a safe and secure manner. The use of a blister pack reduces damage to the product during transportation and storage and therefore reduces waste due to damaged products.

The mixing of different types of material can make recycling inefficient. This can result in materials being placed in landfill rather than being recycled. Consumers can find separating the different materials of a blister pack for recycling challenging. For example, when blister packs are opened the different materials can be stuck to one another making separation challenging.

US 2014/209497 describes a blister pack that includes a blister card and a blister retained on the card defining a compartment for retaining an item. The blister is slidable relative to the card between a closed position in which the item is inaccessible and an opened position in which the item is accessible for removal from the blister pack.

US 2011/278192 describes a theft deterrent display package for at least one article comprises a product cradle having an interior space. A locking tab comprises a free end extends outwardly from one edge of the back face. The locking tab includes two angled fold lines used in assisting the free end of the locking tab to be inserted into the locking slot to securely enclose the display package.

A packaging for blistered products is known from IT MI20 100 376 A1. The blister card has a lower layer and an upper layer connected by a hinge and a tearable opening portion for enabling removing of the blister by sliding.

The present disclosure looks to address this problem by allowing a consumer to easily separate the different materials used in a blister pack.

Aspects of the disclosure are also described in detail, by way of example only, with reference to the accompanying drawings, in which:
Figure 1 shows a perspective view of the packaging article;
Figure 2 shows the packaging article of Figure 1 with the blister shell being removed from the blister card;
Figure 3 shows the packaging article of Figure 1 with the blister shell and blister card separated;
Figure 4a shows blister pack with a single piece blister card prior to packaging;
Figure 4b shows the blister pack of Figure 4a in the process of being packaged;
Figure 4c shows the blister pack of Figure 4a and 4b being opened;
Figure 4d shows an example of the application of an adhesive to the folded single piece blister card;
Figure 5 shows a blister shell and blister card with a notch and recess respectively;
Figure 6 shows the blister shell secured to the blister card using a sticker.

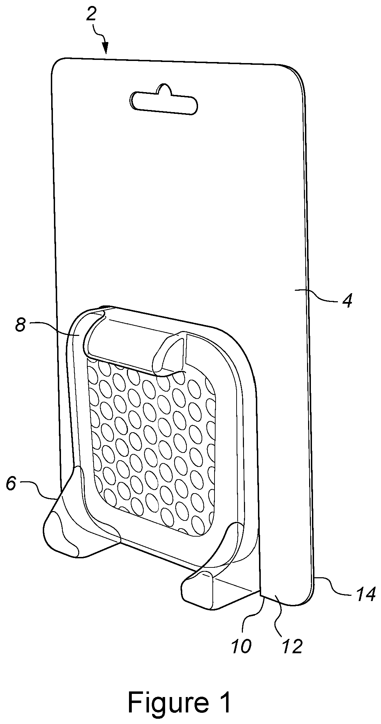

Figure 1 shows a packaging article 2 comprising a blister shell 6 and a blister card 4. The blister card 6 comprises a first layer 12 and a second layer 14. The first layer 12 and the second layer 14 are arranged to form a groove 10. In the example shown in Figure 1, the packaging article 2 is used to secure packaged item 8. The blister card also comprises a recess 24 (not shown in Figure 1).

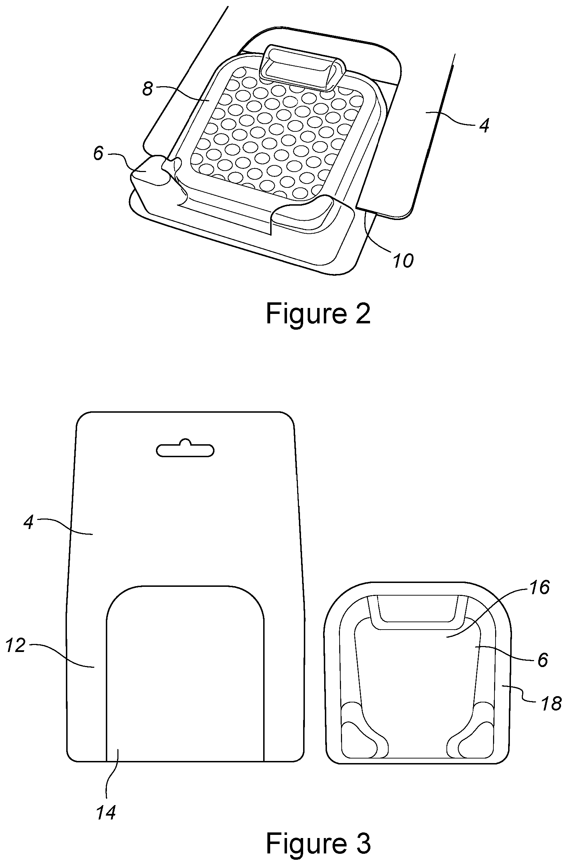

The item is removable from the packaging article 2 by separating the blister shell 6 from the blister card 4. In the example illustrated the blister shell 6 is removed by applying a shear force between the blister shell 6 and the blister card 4 to slide the blister shell 6 along the groove 10 which results in the blister shell 6 being separated from the blister card 4. Figure 2 shows the blister shell 6 being slid along the groove 10 to remove the blister shell from the blister card. The consumer applies the shear force by applying an opposing force to the blister card 4 and the blister shell 6 to slide the blister shell along the groove 10.

In the example illustrated, the blister shell is formed from plastic material and the blister card is formed from a cardboard material. The act of the consumer opening the blister pack results in the different material being separated. The separation of the plastic material from the card material by the consumer when opening the packaging results in a more efficient recycling process.

Figure 3 shows the blister shell 6 separated from the blister card 4. The blister shell 6 comprises a recessed portion 16 that is configured to receive the item to be packaged and a flange portion 18 that is configured to slide along the groove 10. The blister shell 6 also comprises a notch 26 (not shown in Figure 3). The first layer 12 and the second layer 14 of the blister card 4 is also illustrated in Figure 3. As shown, the first layer 12 of the blister card comprises a cut-out that is shaped to correspond to the recessed portion 16 of the blister shell 6. The second layer 14 is shaped to cover the cut-out. In this example, the second layer 14 covers the recessed portion 16 of the blister shell 6 to allow a packaged item 8 to be secured by the packaging article 2.

In this example the first layer 12 is bonded to the second layer 14 using adhesive. The bonding of the first layer 12 to the second layer 14 is such that the groove 10 is formed. The groove 10 is configured to allow the flange 18 to slide along the groove 10 when a shear force is applied between the blister shell 6 and the blister card 4. In an example, the adhesive is applied to such that it surrounds the flange 18 of the blister shell and this arrangement leads to the formation of groove. The adhesive 28 may be a hot melt application, a cold seal application (e.g. a pressure sensitive glue) and/or a heat seal activation (e.g. lacquer coating on paperboard).

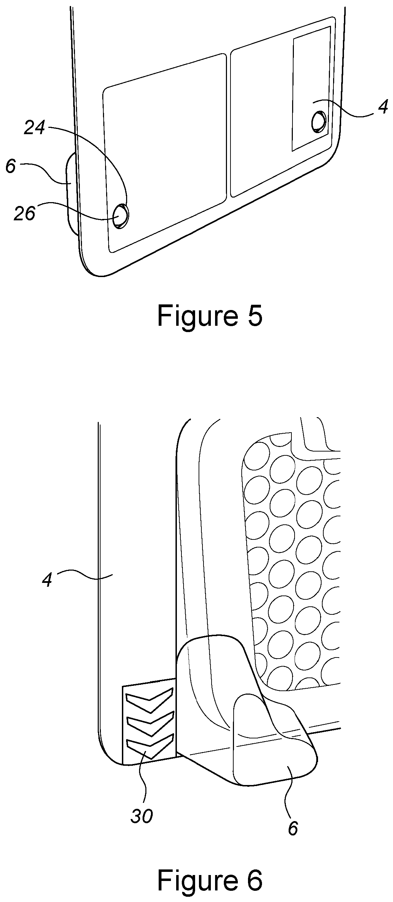

Figure 5 shows the notch 26 of the blister shell and recess 24 of the blister card. the notch 26, when the packaging is in a closed position, is located within the recess 24 on the blister card. The notch 26 is located in the recess 24 when the blister shell is positioned in the blister card and mechanically inhibits movement of the blister shell relative to the blister card. For example, the shear force required from a user to slide the blister shell relative to the blister card will be increased because an additional force will be required to remove the notch 26 from the recess 24.

In the example described above, the blister shell 6 is held by the groove 10 using the notch and corresponding recess. The blister shell 6 may held by the groove 10 via a friction fit. The shear force applied by the consumer is sufficient to overcome the friction and remove the blister shell 4 from the blister card 6.

In the example described above with reference to Figures 1 to 3, the blister shell 4 is held in the groove 10 of the blister card 6 via a friction fit.

Figure 6 shows the blister shell 6 may also be held in the groove 10 using a sticker 30. The sticker 30 is located to inhibit the blister shell 6 being moved relative to the blister card 4 by the consumer applying a shear force discussed above. The sticker may be removed or broken by the consumer prior to opening the packaged article 2. The sticker 30 may be used instead of a notch and/or friction fit or in addition to the notch and/or friction fit.

The blister shell may also be held in the groove 10 using an adhesive. Adhesive such as hot melt application, cold seal application (e.g. pressure sensitive glue) and/or heat seal activation (e.g. lacquer coating) may be used. The adhesive may be used instead of the notch and/or friction fit or in addition to the notch and/or friction fit.

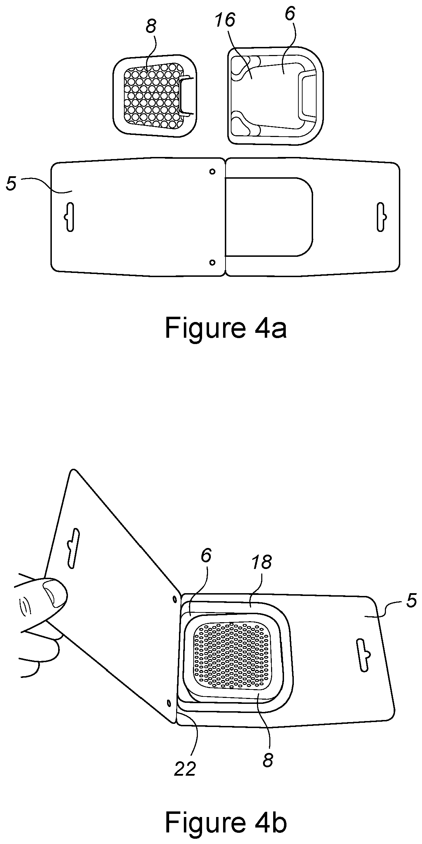

Figure 4a and Figure 4b show the invention in which a single piece blister card 5 is used. Figure 4a shows a single piece blister card 5 with the packaged article 8 and the blister shell 6 described above. Figure 4b shows the packaged article 8 placed in the blister shell 6 with the single piece blister card 5 being folded to close the packaging.

As illustrated in Figure 4a, similar to the example above the single piece blister card 5 comprises a cut-out that is shaped to correspond to the recessed portion 16 of the blister shell 6. As shown in Figure 4b, the recessed portion 16 of the blister shell 6 is placed into the cut-out and the cut-out inhibits the movement of the blister shell 6 and the flange 18 of the blister shell lay adjacent to the single piece blister card 5. The folding of the single piece blister card generates a hinge 22. The hinge 22 is arranged to secure the packaged article 8 in the blister shell 6. The folding of the single piece blister card 5 provides a groove in which the flange 18 is located.

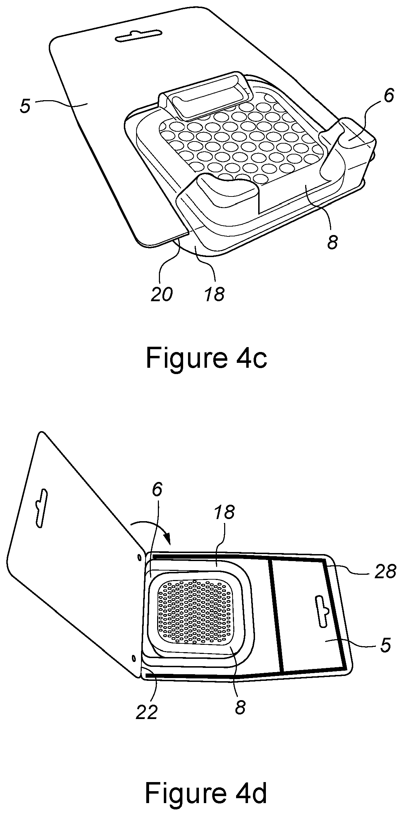

Figure 4c shows the blister shell 6 being removed from the folded single piece blister card 5. In a similar way to described above, the consumer applies a shear force to move the blister shell 6 relative to the single piece blister card. As a result of this force the flange slides along the groove and, as illustrated in Figure 4c, this force has resulted in the flange 18 of the blister shell producing a tear 20 in the hinge 22 of the folded single piece blister card 5 and thus the blister shell 6 can be fully removed from the single piece blister card.

In an example the two sides of the fold single piece blister card 5 may be bonded to one another using an adhesive 28. As illustrated in Figure 4d, the adhesive 28 is applied to such that it surrounds the flange 18 of the blister shell and this arrangement leads to the formation of groove. Figure 4d shows an arrangement where the adhesive is selectively applied to surround the flange of the blister shell at the top of the single piece blister card 5. The adhesive 28 may be a hot melt application, a cold seal application (e.g. pressure sensitive glue) and/or a heat seal activation (e.g. lacquer coating on paperboard).

The sticker 30, notch 26 and recess 24 and/or adhesive may be used on the packaging article 2 using the folded single piece blister card 5 to provide additional security of the blister shell 6 in the packaged article 2.

In the examples above, the blister card is made from cardboard and the blister shell is made from thermoformed PET. The blister shell may also be made from mono PET, recycled PET, PS or PP. Cardboard and PET, mono PET, recycled PET, PS and PP are commonly recycled and the use of these materials and the ease of separation by the consumer will help to increase the amount of the packaging that is recycled.

In an example the packaged article may require an additional seal, for example the packaged article may be sensitive to moisture or require a sealed environment to extend the life of the product. The blister shell may further comprise a sealing film that encloses the product in the blister shell. For example, the sealing film and the blister shell are configured to cooperate to form a substantially sealed receptacle for the packaged article. In an example, the film may be removed from the blister shell to allow the consumer to easily separate the blister shell material from the film material and therefore allow more efficient recycling. In an example, the film may be made from mono BOPP, PE, PET structure with sealing lacquer to ensure recyclability and/or a metallised BOPP/PE laminated foil.

In an example, the flange 18 extends around three sides of the blister shell.

In an example, the flange has a width of 6 to 12 mm, for example 8 to 10 mm, for example 9 mm.

In an example, the blister shell 6 comprises a lower rim in addition to the flange 18 to provide a circumferential sealed seam. The lower rim may, for example, be 2 to 3mm wide. In the example described above, the blister shell may comprise a notch that, when in position, has a corresponding recess on the blister card. The blister shell may also comprise more than one notch that, when in position, has a corresponding more than one recess on the blister card. For example, the blister shell may comprise a pair of notches and a pair of recesses on the blister card.

Further modifications and developments can be made without departing from the scope of the invention as set forth in the appended claims.

## Claims

1. A packaging article comprising a blister shell (6) and a blister card (4);
the blister card comprises a first layer (12) and a second layer (14) arranged to form a groove (10);
wherein the blister shell is configured to be held by the groove and a flange portion (18) of the blister shell is slidable along the groove to remove the blister shell from the blister card;
wherein the blister card is a single piece and is configured to be folded to form the first layer and the second layer; and
a hinge (22) is generated by folding the blister card;
the hinge is arranged to secure the packaged article (8) in the blister shell **characterised in that**, in use, the hinge (22) can be torn by the flange (18) of the blister shell (6) to remove the blister shell from the blister card.

2. The packaging article according to claim 1, wherein the blister shell further comprises a notch (26) and the blister card further comprises a recess (24); the notch is configured to be located in the recess when the blister pack is closed and inhibits the movement of the blister shell with respect to the blister card.

3. The packaging article of any preceding claim, wherein the blister shell comprises a recessed portion (16) for holding the packaged article (8).

4. The packaging article of any preceding claim, wherein the first layer and second layer of the blister card are bonded to each other.

5. The packaging article of claim 3, wherein the first layer comprises a cut-out that is shaped to correspond to the recessed portion of the blister shell and the second layer is shaped to cover the cut-out

6. The packaging article of any preceding claim, wherein the blister card is made from cardboard and the blister shell is made from thermoformed PET.

7. The packaging article of any preceding claim, wherein the blister shell may further comprise a sealing film and the sealing film and the blister shell are configured to cooperate to form a substantially sealed receptacle for the packaged article.

8. The packaging article of any claims 4 to 7, wherein the first layer and second layer of the blister card are bonded to each other using an adhesive (28) applied so that it surrounds the flange of the blister shell and forms the groove.

## Patentansprüche

1. Verpackungsartikel, umfassend eine Blisterschale (6) und eine Blisterkarte (4); wobei die Blisterkarte eine erste Schicht (12) und eine zweite Schicht (14) umfasst, die dazu angeordnet sind, eine Nut (10) auszubilden;
wobei die Blisterschale dazu konfiguriert ist, durch die Nut gehalten zu werden und ein Flanschabschnitt (18) der Blisterschale verschiebbar entlang der Nut ist, um die Blisterschale von der Blisterkarte zu entfernen;
wobei die Blisterkarte ein einziges Stück ist und dazu konfiguriert ist, gefaltet zu werden, um die erste Schicht und die zweite Schicht auszubilden; und
ein Gelenk (22) durch Falten der Blisterkarte erzeugt wird;
das Gelenk dazu angeordnet ist, den verpackten Artikel (8) in der Blisterschale zu fixieren, **gekennzeichnet dadurch, dass** in Verwendung das Gelenk (22) von dem Flansch (18) der Blisterschale (6) zerrissen werden kann, um die Blisterschale von der Blisterkarte zu entfernen.

2. Verpackungsartikel nach Anspruch 1, wobei die Blisterschale ferner eine Kerbe (26) umfasst und die Blisterkarte ferner eine Vertiefung (24) umfasst;
die Kerbe dazu konfiguriert ist, in der Vertiefung positioniert zu sein, wenn die Blisterpackung geschlossen ist, und die Bewegung der Blisterschale in Bezug auf die Blisterkarte unterbindet.

3. Verpackungsartikel nach einem der vorhergehenden Ansprüche, wobei die Blisterschale einen vertieften Abschnitt (16) zum Halten des verpackten Artikels (8) umfasst.

4. Verpackungsartikel nach einem der vorhergehenden Ansprüche, wobei die erste Schicht und die zweite Schicht der Blisterkarte miteinander verbunden sind.

5. Verpackungsartikel nach Anspruch 3,
wobei die erste Schicht einen Ausschnitt umfasst, der so geformt ist, dass er dem vertieften Abschnitt der Blisterschale entspricht und die zweite Schicht so geformt ist, dass sie den Ausschnitt abdeckt.

6. Verpackungsartikel nach einem der vorhergehenden Ansprüche, wobei die Blisterkarte aus Karton hergestellt ist und die Blisterschale aus thermogeformtem PET hergestellt ist.

7. Verpackungsartikel nach einem der vorhergehenden Ansprüche, wobei die Blisterschale ferner eine Dichtungsfolie umfassen kann und die Dichtungsfolie und die Blisterschale dazu konfiguriert sind, zusammenzuwirken, um eine im Wesentlichen abgedichtete Aufnahme für den verpackten Artikel auszubilden.

8. Verpackungsartikel nach einem der Ansprüche 4 bis 7, wobei die erste Schicht und die zweite Schicht der Blisterkarte unter Verwendung eines Klebstoffs (28) miteinander verbunden sind, der so aufgetragen wird, dass er den Flansch der Blisterschale umgibt und die Nut ausbildet.

## Revendications

1. Article d'emballage comprenant une coque blister (6) et une carte blister (4) ; la carte blister comprend une première couche (12) et une deuxième couche (14) agencées pour former une rainure (10) ;
dans lequel la coque blister est configurée pour être maintenue par la rainure et une partie rebord (18) de la coque blister est coulissable le long de la rainure pour retirer la coque blister de la carte blister ;
dans lequel la carte blister est d'une seule pièce et est configurée pour être pliée pour former la première couche et la deuxième couche ; et
une charnière (22) est générée en pliant la carte blister ;
la charnière est agencée pour immobiliser l'article emballé (8) dans la coque blister **caractérisée en ce que**, lors de l'utilisation, la charnière (22) peut être déchirée par le rebord (18) de la coque blister (6) pour retirer la coque blister de la carte blister.

2. Article d'emballage selon la revendication 1, dans lequel la coque blister comprend en outre une encoche (26) et la carte blister comprend en outre un évidement (24) ;
l'encoche est configurée pour être logée dans l'évidement lorsque l'emballage blister est fermé et empêche le mouvement de la coque blister par rapport à la carte blister.

3. Article d'emballage selon l'une quelconque des revendications précédentes, dans lequel la coque blister comprend une partie évidée (16) destinée à contenir l'article emballé (8).

4. Article d'emballage selon l'une quelconque des revendications précédentes, dans lequel la première couche et la deuxième couche de la carte blister sont collées l'une à l'autre.

5. Article d'emballage selon la revendication 3,
dans lequel la première couche comprend une découpe qui est formée pour correspondre à la partie évidée de la coque blister et la deuxième couche est formée pour couvrir la découpe.

6. Article d'emballage selon l'une quelconque des revendications précédentes, dans lequel la carte blister est faite de carton et la coque blister est faite de PET thermoformé.

7. Article d'emballage selon l'une quelconque des revendications précédentes, dans lequel la coque blister peut en outre comprendre un film de scellage et le film de scellage et la coque blister sont configurés pour coopérer pour former un réceptacle sensiblement scellé pour l'article emballé.

8. Article d'emballage selon l'une quelconque des revendications 4 à 7, dans lequel la première couche et la deuxième couche de la carte blister sont collées l'une à l'autre à l'aide d'un adhésif (28) appliqué de manière qu'il entoure le rebord de la coque blister et forme la rainure.
